# EUROPÄISCHE PATENTSCHRIFT

(11) **EP 0 871 821 B1**
(45) Veröffentlichungstag und Bekanntmachung des Hinweises auf die Patenterteilung: **05.02.2003**
(21) Anmeldenummer: 97910236.5
(22) Anmeldetag: 30.09.1997
(51) Int. Cl.: F02M 31/18, F02M 29/00, F02M 53/02

(54) **BRENNKRAFTMASCHINE**
INTERNAL COMBUSTION ENGINE
MOTEUR A COMBUSTION INTERNE

(30) Priorität: 07.11.1996 DE 19645819
(43) Veröffentlichungstag der Anmeldung: 21.10.1998
(73) Patentinhaber: ROBERT BOSCH GMBH, 70442 Stuttgart (DE)
(72) Erfinder: MOSER, Winfried, D-71642 Ludwigsburg (DE); JOOS, Klaus, D-74399 Walheim (DE); ABIDIN, Anwar, D-71229 Leonberg (DE); MALLEBREIN, Georg, D-78224 Singen (DE); LANGE, Jörg, D-71735 Eberdingen (DE); EICHENDORF, Andreas, D-73164 Schorndorf (DE); VOGEL, Christof, D-96120 Bischberg (DE); BENZ, Gerhard, D-71032 Böblingen (DE); SIMON, Nikolaus, D-82418 Murnau (DE)
(86) Internationale Anmeldenummer: DE9702244
(87) Internationale Veröffentlichungsnummer: WO98020246

(56) Entgegenhaltungen:
- CA-A- 1 194 373
- DE-A- 4 010 649
- US-A- 3 866 585
- US-A- 4 233 945
- US-A- 4 713 524

## Beschreibung

### Stand der Technik

Die Erfindung betrifft eine Brennkraftmaschine nach der Gattung des Anspruches 1 bzw. 6.

Bekannt ist durch die US-A-3 866 585 eine Brennkraftmaschine, bei der mittels eines außerhalb eines Saugrohres liegenden Kraftstoffverdampfers Kraftstoffdampf erzeugt und dem Saugrohr stromabwärts der Drosselklappe mittig zugeleitet wird. Bei einer aus der US-A-4 233 945 bekannten Brennkraftmaschine ist ein Vergaser vorgesehen, bei dem aus einer Schwimmerkammer Kraftstoff und Kraftstoffdampf stromabwärts der Starterklappe und stromaufwärts der Drosselklappe dem Saugrohr zugeführt werden.

Bei einer solchen Brennkraftmaschine werden zur Verringerung der im Abgas enthaltenen Kohlenwasserstoffe (HC-Rohemission) den Verbrennungszylindern der kalten Brennkraftmaschine beim Kaltstart und beim sich daran anschließenden Warmlauf mit Verbrennungsluft gemischter Kraftstoffdampf zentral über das Saugrohr zugeführt. Dadurch verläuft die Verbrennung in den Verbrennungszylindern sehr stabil und weitgehend homogen, und der HC-Ausstoß wird drastisch verringert. Im normalen Fahrbetrieb wird dagegen auf die Kraftstoffdampfzumischung verzichtet und der Kraftstoff in bekannter Weise über die Einspritzventile den Verbrennungszylindern zugeführt.

Bei einem bekannten Verfahren zur Vermischung von Kraftstoffdampf mit Verbrennungsluft im zentralen Saugrohr der Brennkraftmaschine (Charles Aquino and Williams D. Plensdorf "An Evaluation of Local Heating as a Means of Fuel Evaporation for Gasoline Engines", Int. Congress and Exposition, Detroit, Michigan, Febr. 24 - 28.1985, SAE Technical Paper Series,860246, 1986) werden mittels im Saugrohr in Strömungsrichtung gesehen hinter der Drosselklappe angeordneter sog. Swirl Vanes Wirbelstraßen im Saugrohr erzeugt, in die mittels zweier vor der Drosselklappe angeordneter Einspritzventile Kraftstoff weitgehend tangential in das Saugrohr eingespritzt wird. Der eingebrachte Kraftstoffspray wird durch die Wirbel an beheizte Flächen, die den Swirl Vanes im Saugrohr nachgeordnet sind, geführt und dort verdampft. Der entstehende Kraftstoffdampf vermischt sich intensiv mit der verwirbelten Verbrennungsluft, so daß ein weitgehend homogenes Kraftstoff-Luft-Gemisch entsteht. Die zur Verwirbelung in das Saugrohr eingebauten Swirl Vanes sind jedoch insofern nachteilig, als sie die Ansaugluft deutlich drosseln und damit zu einer erheblichen Leistungs- und Wirkungsgradverminderung führen.

### Vorteile der Erfindung

Die erfindungsgemäße Brennkraftmaschine mit den kennzeichnenden Merkmalen des Anspruchs 1 bzw. 6 hat demgegenüber den Vorteil, daß zur intensiven Mischung von Kraftstoffdampf und Verbrennungsluft keine leistungs- und wirkungsgradreduzierende Einbauten im Saugrohr vorgesehen werden, sondern die im Saugrohr natürlich vorhandenen Wirbelstraßen, die sich unvermeidbar infolge der aus anderen Gründen bedingten Saugrohr- und/oder Drosselklappengeometrie ausbilden, für die Verwirbelung des außerhalb des Saugrohrs erzeugten Kraftstoffdampfs ausgenutzt werden. Solche Wirbelstraßen ergeben sich an konstruktiv bedingten Unstetigkeiten der Saugrohrwand und insbesondere an den Drosselklappenkanten. Gegenüber dem Saugrohr ohne Kraftstoffdampfzumischung für Kaltstart und Warmlauf ergeben sich durch die Kraftstoffdampfzumischung keine zusätzlichen Strömungswiderstände, gegenüber der bekannten zentralen Kraftstoffdampfzumischung verringert sich neben dem Vorteil der Leistungs- und Wirkungsgradverbesserung der konstruktive Aufwand im Saugrohr. Durch die Kraftstoffdampferzeugung außerhalb des Saugrohrs und die Kraftstoffdampfeinbringung in die Luftwirbel anstelle einer Kraftstoffsprayeinbringung und anschließenden Verdampfung an beheizten Flächen im Saugrohr wird noch vor der Verzweigung des Saugrohrs zu den einzelnen Verbrennungszylindern eine sehr homogene Gemischbildung erreicht, wodurch eine exakt gleiche Qualität des Kraftstoff-Luft-Gemisches für die einzelnen Verbrennungszylinder sichergestellt wird. Dies führt wiederum zu gleichen Betriebsbedingungen aller Verbrennungszylinder, einer Verminderung der Wandfilmbildung in den Verbrennungszylindern und einer stabilen Verbrennung in den Verbrennungszylindern. Der Ausstoß von Kohlenwasserstoffen mit dem Abgas ist drastisch reduziert und der Katalysator kann schon sehr frühzeitig nach dem Start der Brennkraftmaschine zu konvertieren beginnen.

Durch die in den abhängigen Ansprüchen aufgeführten Maßnahmen sind vorteilhafte Weiterbildungen und Verbesserungen der im Anspruch 1 bzw. 6 angegebenen Brennkraftmaschine möglich.

Die Einleitung des Kraftstoffdampfes in die "natürlichen" Wirbelstraßen im Saugrohr läßt sich durch entsprechende geometrische Ausprägungen der Mündung der Kraftstoffdampf-Zuführvorrichtung innerhalb des Saugrohrs erreichen.

In einer bevorzugten Ausführungsform der Erfindung weist hierzu die Zuführvorrichtung mindesten zwei zueinander diametral nahe der Saugrohrwand angeordnete Mündungsöffnungen auf, deren Öffnungsquerschnitt jeweils unter einem Winkel von ca. 45° zur Saugrohrachse geneigt in Strömungsrichtung weist. Die beiden Mündungsöffnungen sind dabei bevorzugt jeweils an der Stirnseite eines von zwei diametralen Mündungsstutzen ausgebildet, die radial von der Saugrohrwand abstehen und über einen halbkreisbogenförmigen, an der Saugrohrwand anliegenden Zuleitungsbogen mit einem die Saugrohrwand durchstoßenden, an dem Kraftstoffverdampfer angeschlossenen Zuleitungsstutzen verbunden sind.

Gemäß einer alternativen Ausführungsform der Erfindung weist bei einer sog. Registerdrosselklappenausführung die Zuführvorrichtung eine im Bereich des Trennstegs zwischen den Registeröffnungen angeordnete Mündungsöffnung auf, deren Öffnungsquerschnitt unter einem Winkel von ca. 45° zur Saugrohrachse geneigt in Strömungsrichtung weist. Diese Mündungsöffnung ist an der Stirnseite eines die Saugrohrwand durchstoßenden, bis in den Trennstegbereich reichenden Mündungsstutzens ausgebildet, der an dem Kraftstoffverdampfer angeschlossen ist.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen schematischen Längsschnitt einer Brennkraftmaschine mit Verbrennungszylinder und Saugrohr,
- Fig. 2: eine vergrößerte Darstellung des Ausschnitts II in Fig. 1 in konstruktiver Ausführung,
- Fig. 3: einen Schnitt längs der Linie III-III in Fig. 2,
- Fig. 4: eine Draufsicht eines modifizierten Saugrohrs der Brennkraftmaschine mit sog. Registerdrosselklappe,
- Fig. 5: einen Schnitt längs der Linie V-V in Fig. 4.

### Beschreibung der Ausführungsbeispiele

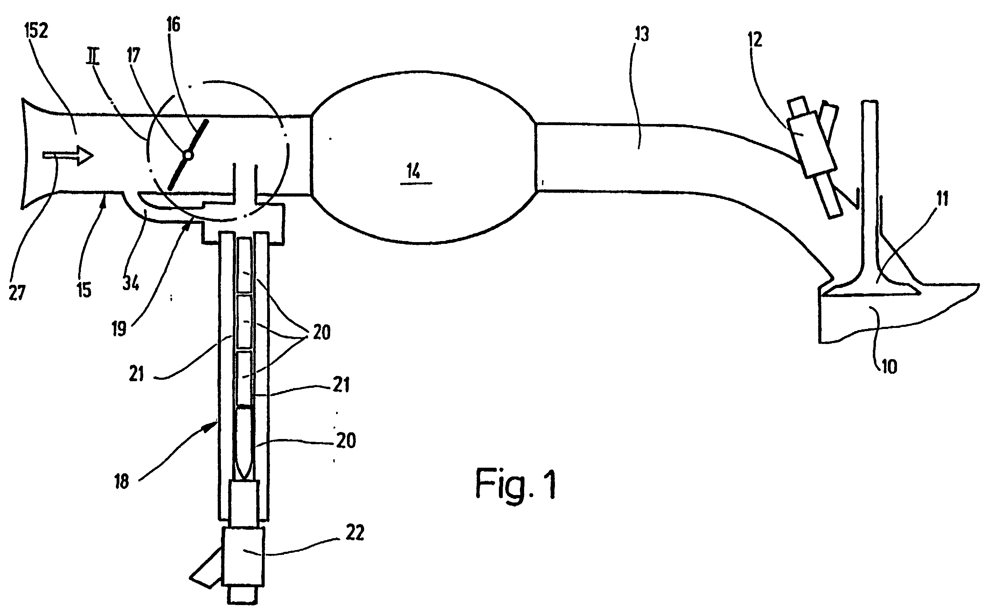

Die in Fig. 1 ausschnittweise und schematisch im Längsschnitt dargestellte Brennkraftmaschine weist mehrere Verbrennungszylinder auf, von denen nur ein Verbrennungszylinder 10 mit schematisch angedeutetem Einlaßventil 11 und Kraftstoffeinspritzventil 12 ausschnittweise dargestellt ist. Zu dem Einlaßventil 11 des Verbrennungszylinders 10 führt ein sog. Schwingrohr 13, das, wie die übrigen Schwingrohre 13 für die weiteren Verbrennungszylinder 10, von einer Beruhigungskammer 14 abzweigt. In der Beruhigungskammer 14 mündet ein Saugrohr 15 der Brennkraftmaschine, welches dem Ansaugen von Verbrennungsluft dient, die dann über die einzelnen Schwingrohre 13 an die Einlaßventile 11 der Verbrennungszylinder 10 geführt wird. Die benötigte Menge der angesaugten Verbrennungsluft wird mittels einer Drosselklappe 16 gesteuert, die im Saugrohr 15 auf einer quer zur Strömungsrichtung ausgerichteten Schwenkachse 17 schwenkbar gelagert ist und aus einer den Luftdurchtrittsquerschnitt des Saugrohrs 15 überdeckenden Schließstellung in eine den vollen Saugrohrquerschnitt freigebenden Öffnungsstellung und umgekehrt geschwenkt werden kann, wobei sie jede Zwischenstellung einzunehmen vermag.

Zur Verbesserung der Kohlenwasserstoff-Emission im Abgas bei Kaltstart der Brennkraftmaschine und anschließendem Warmlauf wird in diesen Betriebsphasen der Brennkraftmaschine der über das Saugrohr 15 angesaugten Verbrennungsluft Kraftstoffdampf zugesetzt, der intensiv mit der Verbrennungsluft vermischt wird, so daß über die Einlaßventile 11 den Verbrennungszylindern 10 ein möglichst homogenes Kraftstoffdampf-Luft-Gemisch zugeführt wird. Hierzu ist ein Kraftstoffverdampfer 18 vorgesehen, der über eine Zuführvorrichtung 19 mit dem Innern des Saugrohrs 15 in Verbindung steht. Der Kraftstoff Verdampfer 18 weist konvektive Heizflächen 20, zwischen denen enge, querschnittskleine Durchtrittsspalte 21 vorgehalten sind, und ein Einspritzventil 22 zum Einspritzen von Kraftstoff in diese Durchtrittsspalte 21 auf. Der von dem Einspritzventil 22 zwischen die Heizflächen 20 eingespritzte Kraftstoff wird durch die Durchtrittsspalte 21 hindurchgepreßt und dabei verdampft. Der hierdurch entstehende Kraftstoffdampf wird über die Zuführvorrichtung 19 dem Saugrohr 15 in einen unmittelbar stromabwärts der Drosselklappe 16 befindlichen Saugrohrabschnitt 151 zugeführt. Die Einbringung des Kraftstoffdampfes erfolgt dabei durch entsprechende Anordnung und Ausbildung der Mündung der Zuführvorrichtung 19 im Saugrohrabschnitt 151 derart, daß der Kraftstoffdampf in eine im Saugrohrabschnitt 151 sich aufgrund der konstruktiv bedingten Saugrohr- und/oder Drosselklappengeometrie unvermeidlich ausbildende Wirbelstraße der Verbrennungsluft eintritt. Solche Mirbelstraßen bilden sich unvermeidlich z.B. an Unstetigkeiten in der Wandfläche des Saugrohrs 15 aus, insbesondere aber an den Kanten der Drosselklappe 16.

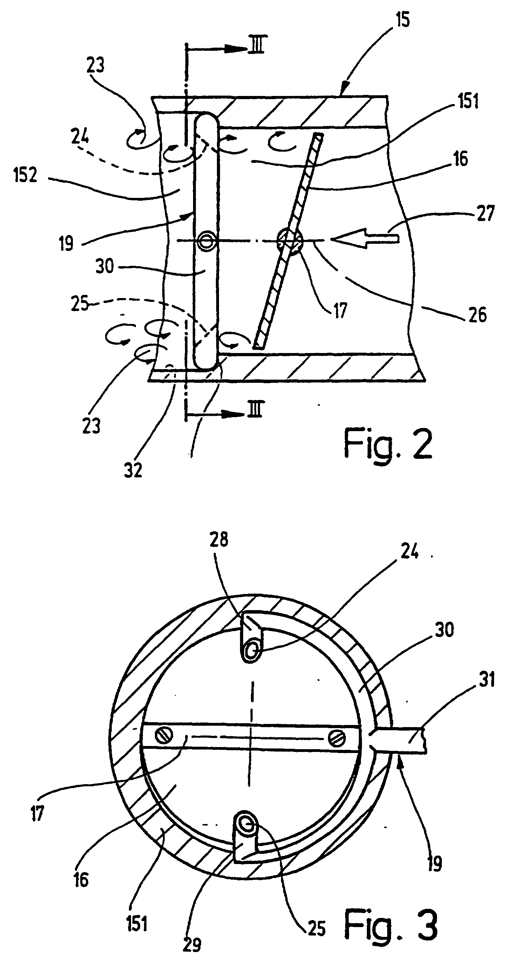

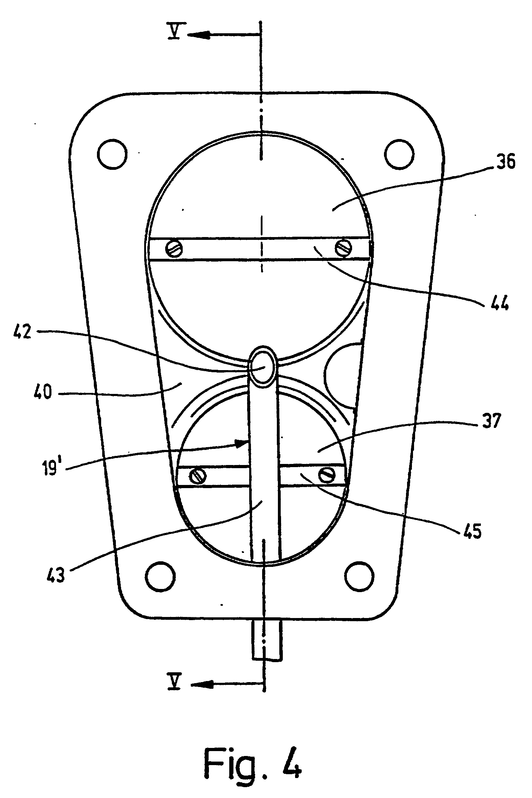

Bei dem in Fig. 2 und 3 dargestellten Saugrohrabschnitt 151 wird der Kraftstoffdampf in die Wirbelstraße engebracht, die sich unvermeidlich längs des Drosselklappenrandes ausbildet. Diese wirbelstraße ist in Fig. 2 mit kleinen Strömungspfeilen angedeutet und insgesamt mit 23 bezeichnet. Diese Wirbelstraße 23 bildet sich über den gesamten Umfang der hier kreisrund ausgeführten Drosselklappe 16 aus. Zur Einbringung des von dem Kraftstoffverdampfer 18 erzeugten Kraftstoffdampfs in diese Wirbelstraße 23 weist die Zuführvorrichtung 19 zwei nahe an der Saugrohrwand liegende Mündungsöffnungen 24,25 auf, deren Öffnungsquerschnitt jeweils unter einem Winkel von ca. 45° zur Achse 26 des Saugrohrs 15 geneigt ist und in Strömungsrichtung der Verbrennungsluft weist. Die Strömungsrichtung der Verbrennungsluft ist in Fig. 1 und 2 mit einem Strömungspfeil 27 gekennzeichnet. Die Mündungsöffnungen 24,25 sind jeweils an der Stirnseite eines Mündungsstutzens 28 bzw. 29 ausgebildet, der radial von der Saugrohrwand absteht. Die beiden Mündungsstutzen 28,29 liegen sich an der Saugrohrachse 26 diametral gegenüber und sind über einen zwischen den beiden Mündungsstutzen 28,29 sich erstreckenden halbkreisbogenförmigen Zuleitungsbogen 30 an einem Zuleitungsstutzen 31 angeschlossen. Der im Zuleitungsbogen 30 mündende Zuleitungsstutzen 31 durchstößt radial die Wand des Saugrohrs 15 und ist mit dem Ausgang des Kraftstoffverdampfers 18 verbunden. Der Zuleitungsbogen 30 ist in eine halbkreisbogenförmige Ausnehmung 32 in der Saugrohrwand eingelegt und stützt sich an der am Ende der Ausnehmung 32 Busgebildeten Ringschulter 33 ab.

In der Zuführvorrichtung 19 gemäß Fig. 2 und 3 können selbstverständlich noch weitere Mündungsöffnungen vorgesehen werden, die in gleicher Weise ausgebildet werden wie die Mündungsöffnungen 24,25, diesen gegenüber aber um bestimmte Umfangswinkel versetzt angeordnet werden. Auch diese Mündungsöffnungen sind dann an den freien Stirnseiten von Mündungsstutzen ausgebildet, die über entsprechende Zuleitungsbogen mit dem Zuleitungsstutzen 31 verbunden sind. Alle diese Mündungsöffnungen werden - wie dies für die Mündungsöffnungen 24,25 beschrieben ist - so angeordnet, daß der aus ihnen ausströmende Kraftstoffdampf in die Wirbelstraße 23, die sich am kreisförmigen Umfangsrand der Drosselklappe 16 ausbildet, eingebracht wird.

In bestimmten Fällen wird dem Kraftstoffdampf vor Einbringen in den Saugrohrabschnitt 151 noch Luft beigemischt. Hierzu ist - wie dies in Fig. 1 schematisch skizziert ist - die Zuführvorrichtung 19 über einen Kanal 34 mit dem in Strömungsrichtung unmittelbar vor der Drosselklappe 16 liegenden Saugrohrabschnitt 152 verbunden, so daß ein kleiner Teil der Verbrennungsluft aus dem Saugrohr 15 im Saugrohrabschnitt 152 abgezweigt und über die Zuführvorrichtung 19 zusammen mit dem Kraftstoffdampf wieder dem Saugrohr 15 im Saugrohrabschnitt 151 zugeführt wird.

Im normalen Fahrbetrieb, d.h. nach Abschluß der Warmlaufphase der Brennkraftmaschine. wird die Kraftstoffdampferzeugung und -beimischung eingestellt und die Kraftstoffzufuhr zu den Verbrennungszylindern 10 erfolgt in bekannter Weise durch die Kraftstoffeinspritzventile 12.

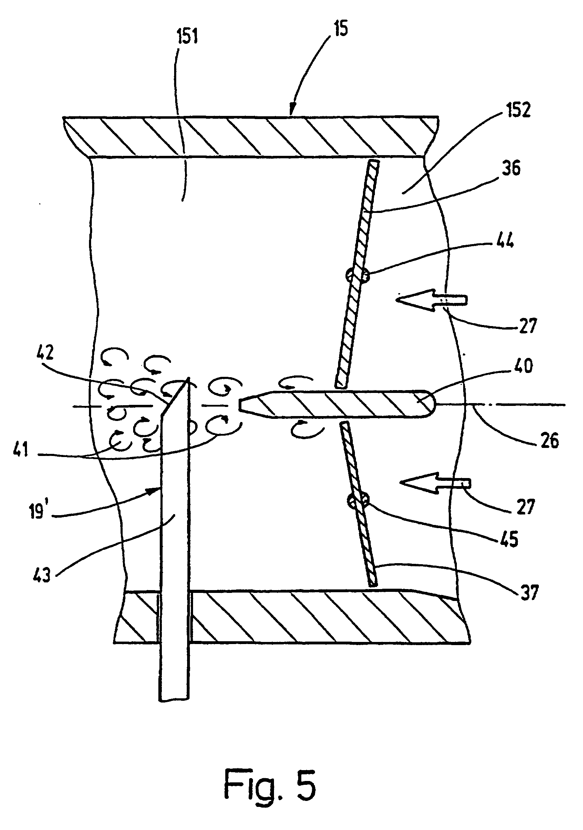

Bei dem in Fig. 4 und 5 dargestellten Saugrohrabschnitt 151 eines modifizierten Saugrohrs 15 ist die Drosselklappe als sog. Registerdrosselklappe 35 ausgebildet. Die Registerdrosselklappe 35 umfaßt zwei kreisrunde Klappenteile 36,37 mit unterschiedlichem Durchmesser, wobei der obere Klappenteil 36 den größeren Durchmesser aufweist. Die beiden Klappenteile 36,37 steuern zwei Registeröffnungen 38,39, die durch einen bis zur Saugrohrwand sich erstreckenden Trennsteg 40 voneinander getrennt sind. Jeder Klappenceil 36,37 vermag die ihm zugeordnete Registeröffnung 38 bzw. 39 vollständig oder teilweise zu schließen oder vollständig für den Luftdurchtritt freizugeben.

Bei einer solchermaßen ausgebildeten Registerdrosselklappe 35 im Saugrohr 15 wird bevorzugt der Kraftstoffdampf - ggf. unter Beimischung von Luft - in die Wirbelstraße 41 (Fig. 5) eingebracht, die sich unvermeidlich am Trennsteg 40 ausbildet. Hierzu ist die Mündungsöffnung 42 der Zuführvorrichtung 19' im Bereich des Trennstegs 40 angeordnet, wobei wiederum deren öffnungsquerschnitt unter einem Winkel von ca. 45° zur Saugrohrachse 26 geneigt in Strömungsrichtung (Pfeil 27 in Fig. 5) weist. Die Mündungsöffnung 42 ist an der Stirnseite eines radial die Saugrohrwand durchstoßenden Mündungsstutzens 43 ausgebildet, der bis in den Bereich des Trennstegs 40 reicht und an dem Kraftstoffverdampfer 18 (Fig. 1) angeschlossen ist.

Das in der vorstehend in zwei Ausführungsbeispielen beschriebenen Brennkraftmaschine realisierte Verfahren zum zentralen Zumischen von Kraftstoffdampf zu der über das Saugrohr 15 angesaugten Verbrennungsluft beim Kaltstart der Brennkraftmaschine und in deren Warmlaufphase zeichnet sich zusammenfassend also dadurch aus, daß der Kraftstoffdampf außerhalb des Saugrohrs 15 erzeugt und in hinter der Drosselklappe 16 bzw. 35 im Saugrohr 15 sich infolge der Saugrohr- und/oder Drosselklappengeometrie unvermeidbar ausbildenden Luftwirbelstraßen 23 bzw. 41 eingebracht wird. Dabei ist von entscheidendem Vorteil, daß keine zusätzlichen Maßnahmen zur Luftverwirbelung im Saugrohr 15 getroffen werden, die dem Ansaugluftstrom erhöhte Strömungswiderstände entgegensetzen und durch Drosselung des Ansaugluftstroms leistungs- und wirkungsgradreduzierend wirken, sondern daß vielmehr auf "natürlich" auftretende. Wirbelstraßen 23 bzw. 41 zurückgegriffen wird, in die der außerhalb des Saugrohrs 15 erzeugte Kraftstoffdampf unmittelbar eingebracht wird. Diese "natürlichen" Luftwirbel sind bestens geeignet, Kraftstoffdampf und Ansaugluft intensiv zu mischen und dadurch über die Einlaßventile 11 den Verbrennungszylindern 10 ein homogenes Kraftstoff-Luft-Gemisch zuzuführen, dessen Qualität für alle Verbrennungszylinder 10 die gleiche ist. Die Verbrennung läuft damit in allen Verbrennungszylindern 10 sehr stabil und außerordentlich homogen ab. Dadurch läßt sich die HC-Rohemission der kalten Brennkraftmaschine drastisch verringern, und gleichzeitig lassen sich Betriebsbedingungen für die Brennkraftmaschine realisieren, die dazu führen, daß der Katalysator schon sehr frühzeitig nach dem Start zu konvertieren beginnt.

## Patentansprüche

1. Brennkraftmaschine für Kraftfahrzeuge, mit einem zu mindestens einem Verbrennungszylinder (10) führenden Saugrohr (15) zum Ansaugen von Verbrennungsluft, in dem eine Drosselklappe (16;35) angeordnet ist und in Strömungsrichtung hinter der Drosselklappe (16;35) eine Vermischung von Verbrennungsluft und Kraftstoffdampf bewirkt wird, wobei zur Kraftstoffverdampfung ein außerhalb des Saugrohrs (15) angeordneter Kraftstoffverdampfer (18) vorgesehen und der Kraftstoffdampf über eine Zuführvorrichtung (19) in den unmittelbar stromabwärts der Drosselklappe (16;35) befindlichen Saugrohrabschnitt (151) eingebracht ist und dass die Mündung der Zuführvorrichtung (19) im Saugrohr (15) so angeordnet und ausgebildet ist, dass der Kraftstoffdampf in eine in diesem Saugrohrabschnitt (151) aufgrund der konstruktiv bedingten Saugrohr- und/oder Drosselklappengeometrie sich unvermeidlich ausbildenden Wirbelstraße (23;41) der Verbrennungsluft eintritt, **dadurch gekennzeichnet, dass** die Zuführvorrichtung (19) zumindest zwei diametral nahe der Saugrohrwand angeordnete Mündungsöffnungen (24,25) aufweist.

2. Brennkraftmaschine nach Anspruch 1, **dadurch gekennzeichnet, dass** der Öffnungsquerschnitt der Mündungsöffnungen jeweils unter einem Winkel von ca. 45° zur Saugrohrachse (26) geneigt in Strömungsrichtung (27) weist.

3. Brennkraftmaschine nach Anspruch 2, **dadurch gekennzeichnet, daß** die Mündungsöffnungen (24,25) jeweils an der Stirnseite eines von zwei diametralen Mündung sstutzen (24,25) ausgebildet sind, die von der Saugrohrwand abstehen und über einen halbkreisbogenförmigen, an der Saugrohrwand anliegenden Zuleitungsbogen (30) mit einem die Saugrohrwand durchstoßenden, an dem Kraftstoffverdampfer (18) angeschlossenen Zuleitungsstutzen (31) verbunden sind.

4. Brennkraftmaschine nach Anspruch 3, **dadurch gekennzeichnet, daß** in die Saugrohrwand eine halbkreisbogenförmige Ausnehmung (32) eingebracht ist, in welcher der Zuleitungsbogen (30) einliegt und sich an der dort ausgebildeten Radialschulter (33) axial abstützt.

5. Brennkraftmaschine nach Anspruch 3 oder 4, **dadurch gekennzeichnet, daß** der Zuleitungsbogen (30) und die Mündungsstutzen (28,29) miteinander einstückig ausgebildet sind.

6. Brennkraftmaschine für Kraftfahrzeuge, mit einem zu mindestens einem Verbrennungszylinder (10) führenden Saugrohr (15) zum Ansaugen von Verbrennungsluft, in dem eine Drosselklappe (16;35) angeordnet ist und in Strömungsrichtung hinter der Drosselklappe (16;35) eine Vermischung von Verbrennungsluft und Kraftstoffdampf bewirkt wird, wobei zur Kraftstoffverdampfung ein außerhalb des Saugrohrs (15) angeordneter Kraftstoffverdampfer (18) vorgesehen und der Kraftstoffdampf über eine Zuführvorrichtung (19') in den unmittelbar stromabwärts der Drosselklappe (16;35) befindlichen Saugrohrabschnitt (151) eingebracht ist und dass die Mündung der Zuführvorrichtung (19') im Saugrohr (15) so angeordnet und ausgebildet ist, dass der Kraftstoffdampf in eine in diesem Saugrohrabschnitt (151) aufgrund der konstruktiv bedingten Saugrohr- und/oder Drosselklappengeometrie sich unvermeidlich ausbildenden Wirbelstraße (23;41) der Verbrennungsluft eintritt, **dadurch gekennzeichnet, dass** die Drosselklappe als Registerdrosselklappe (35) mit mindestens zwei neben- oder übereinander angeordneten Klappenteilen (36,37) ausgebildet ist, die jeweils eine von mindestens zwei durch einen bis zur Saugrohrwand sich erstreckenden Trennsteg (40) voneinander getrennte Registeröffnungen (38,39) im Saugrohr (15) steuern, und dass die Zuführvorrichtung (19') eine im Bereich des Trennstegs (40) angeordnete Mündungsöffnung (42) aufweist, deren Öffnungsquerschnitt unter einem Winkel von 45° zur Saugrohrachse (26) geneigt in Strömungsrichtung weist.

7. Brennkraftmaschine nach Anspruch 6, **dadurch gekennzeichnet, daß** die Mündungsöffnung (42) an der Stirnseite eines die Saugrohrwand durchstoßenden, bis in den Trennstegbereich reichenden Mündungsstutzens (43) ausgebildet ist, der an dem Kraftstoffverdampfer (18) angeschlossen ist.

8. Brennkraftmaschine nach einem der Ansprüche 1 - 7, **dadurch gekennzeichnet, daß** der Kraftstoffverdampfer (18) konvektive Heizflächen (20) mit dazwischen vorhandenen, querschnittskleinen Durchtrittsspalten (21) und ein Einspritzventil (22) zum Einspritzen von Kraftstoff in die Durchtrittsspalte (21) aufweist.

9. Brennkraftmaschine nach einem der Ansprüche 1 - 8, **dadurch gekennzeichnet, daß** dem Saugrohr (15) eine Beruhigungskammer (14) nachgeordnet ist und daß von der Beruhigungskammer (14) aus Schwingrohre (13) zu jeweils einem von mehreren Verbrennungszylindern (10) führen.

## Claims

1. Internal combustion engine for motor vehicles, with a suction pipe (15) for sucking in combustion air, which leads to at least one combustion cylinder (10) and in which a throttle valve (16; 35) is arranged and, downstream of the throttle valve (16; 35) in the direction of flow, an intermixing of combustion air and fuel vapour is brought about, for fuel evaporation a fuel evaporator (18) arranged outside the suction pipe (15) being provided, and the fuel vapour being introduced via a feed device (19) into the suction-pipe portion (151) located directly downstream of the throttle valve (16; 35), and the mouth of the feed device (19) in the suction pipe (15) being arranged and designed in such a way that the fuel vapour enters a vortex trail (23; 41) of the combustion air which is formed unavoidably in this suction-pipe portion (151) by virtue of the structurally induced suction-pipe and/or throttle-valve geometry, **characterized in that** the feed device (19) has at least two mouth orifices (24, 25) arranged diametrically near the suction-pipe wall.

2. Internal combustion engine according to Claim 1, **characterized in that** the orifice cross section of the mouth orifices in each case points in the direction of flow (27) at an inclination having an angle of approximately 45° to the suction-pipe axis (26).

3. Internal combustion engine according to Claim 2, **characterized in that** the mouth orifices (24, 25) are formed in each case on the end face of one of two diametral mouth nipples (24, 25) which project from the suction-pipe wall and are connected, via a semicircularly arcuate delivery arc (30) resting against the suction-pipe wall, to a delivery connection piece (31) passing through the suction-pipe wall and connected to the fuel evaporator (18).

4. Internal combustion engine according to Claim 3, **characterized in that** the suction-pipe wall has introduced into it a semicircularly arcuate recess (32), in which the delivery arc (30) is seated and is supported axially on the radial shoulder (33) formed there.

5. Internal combustion engine according to Claim 3 or 4, **characterized in that** the delivery arc (30) and the mouth nipples (28, 29) are formed in one piece with one another.

6. Internal combustion engine for motor vehicles, with a suction pipe (15) for sucking in combustion air, which leads to at least one combustion cylinder (10) and in which a throttle valve (16; 35) is arranged and, downstream of the throttle valve (16; 35) in the direction of flow, an intermixing of combustion air and fuel vapour is brought about, for fuel evaporation a fuel evaporator (18) arranged outside the suction pipe (15) being provided, and the fuel vapour being introduced via a feed device (19') into the suction-pipe portion (151) located directly downstream of the throttle valve (16; 35), and the mouth of the feed device (19') in the suction pipe (15) being arranged and designed in such a way that the fuel vapour enters a vortex trail (23; 41) of the combustion air which is formed unavoidably by virtue of the structurally induced suction-pipe and/or throttle-valve geometry, **characterized in that** the throttle valve is designed as a register throttle valve (35) with at least two valve parts (36, 37) arranged next to one another or one above the other, which in each case control one of at least two register orifices (38, 39) in the suction pipe (15) which are separated from one another by a separating web (40) extending as far as the suction-pipe wall, and **in that** the feed device (19') has a mouth orifice (42) which is arranged in the region of the separating web (40) and the orifice cross section of which points in the direction of flow at an inclination having an angle of 45° to the suction-pipe axis (26).

7. Internal combustion engine according to Claim 6, **characterized in that** the mouth orifice (42) is formed on the end face of a mouth nipple (43) which passes through the suction-pipe wall and reaches into the separating-web region and which is connected to the fuel evaporator (18).

8. Internal combustion engine according to one of Claims 1 - 7, **characterized in that** the fuel evaporator (18) has convective heating surfaces (20), with passage gaps (21) of small cross section present between them, and an injection valve (22) for the injection of fuel into the passage gaps (21).

9. Internal combustion engine according to one of Claims 1 - 8, **characterized in that** the suction pipe (15) is followed by a stabilizing chamber (14), and **in that** oscillating pipes (13) lead from the stabilizing chamber (14) to one of a plurality of combustion cylinders (10) in each case.

## Revendications

1. Moteur à combustion interne de véhicule automobile comportant au moins une tubulure d'aspiration (15) reliée à un cylindre (10) pour aspirer de l'air comburant, et équipée d'un volet d'étranglement (16, 35), dans laquelle derrière le volet d'étranglement (16, 35) dans la direction d'écoulement, on mélange l'air comburant et de la vapeur de carburant, avec pour vaporiser le carburant un vaporisateur de carburant (18) en dehors de la tubulure d'aspiration (15), la vapeur de carburant étant introduite par un dispositif d'alimentation (19) dans le segment de tubulure d'aspiration (151) directement en aval du volet d'étranglement (16 ; 35), et l'embouchure du dispositif d'alimentation (19) dans la tubulure d'aspiration (15) étant installée et réalisée pour que la vapeur de carburant pénètre dans un chemin turbulent (23 ; 41) de l'air comburant, chemin turbulent qui se développe nécessairement à cause de la géométrie de la construction de la tubulure d'aspiration et/ou du volet d'étranglement,
**caractérisé en ce que**
le dispositif d'alimentation (19) comporte au moins deux embouchures (24, 25) situées diamétralement à proximité de la paroi de la tubulure d'aspiration.

2. Moteur à combustion interne selon la revendication 1,
**caractérisé en ce que**
la section d'ouverture des embouchures est inclinée chacune d'un angle d'environ 45° par rapport à l'axe de la tubulure d'aspiration (26), en étant dirigée dans le sens de l'écoulement (27).

3. Moteur à combustion interne selon la revendication 2,
**caractérisé en ce que**
les embouchures (24, 25) sont réalisées au niveau de la face frontale de l'un des deux ajutages (28, 29) diamétraux, en saillie par rapport à la paroi de la tubulure d'aspiration, et reliées par une conduite cintrée en demi-arc de cercle (30) appliquée contre la paroi de la tubulure d'aspiration, cette conduite étant reliée à un ajutage d'alimentation (31) traversant la paroi de la tubulure d'aspiration, au vaporisateur de carburant (18).

4. Moteur à combustion interne selon la revendication 3,
**caractérisé par**
une cavité (32) en forme d'arc en demi-cercle réalisée dans la paroi de la tubulure d'aspiration pour recevoir la conduite cintrée (30) et celle-ci s'appuie axialement contre les épaulements radiaux (33).

5. Moteur à combustion interne selon l'une quelconque des revendications 3 ou 4,
**caractérisé en ce que**
la conduite d'alimentation cintrée (30) et les ajutages (28, 29) sont réalisés en une seule pièce.

6. Moteur à combustion interne de véhicule automobile, comportant au moins une tubulure d'aspiration (15) reliée à un cylindre (10) pour aspirer de l'air comburant, cette tubulure étant équipée d'un volet d'étranglement (16, 35) pour qui en aval de ce volet d'étranglement (16, 35) on réalise le mélange d'air comburant et de vapeur de carburant,
la vaporisation du carburant se faisant dans un vaporisateur de carburant (18) installé à l'extérieur de la tubulure d'aspiration (15) et la vapeur de carburant étant introduite par un dispositif d'alimentation (19') dans le segment de tubulure d'aspiration (151) qui se trouve directement en aval du volet d'étranglement (16, 35), et
l'embouchure du dispositif d'alimentation (19') dans la tubulure d'aspiration (15) étant installée et réalisée pour que la vapeur de carburant arrive dans le chemin turbulent (23, 41) de l'air comburant, chemin qui se développe nécessairement du fait de la géométrie de construction de la tubulure d'aspiration et/ou du volet d'étranglement,
**caractérisé en ce que**
le volet d'étranglement est réalisé comme volet d'étranglement à registre (35) avec au moins deux parties de volet (36, 37) juxtaposées ou placées l'une au-dessus de l'autre, ces deux parties commandant chacune l'un des orifices de registre (38, 39) de la tubulure d'aspiration (15), orifices séparés l'un de l'autre par une entretoise de séparation (40) s'étendant jusqu'à la paroi de la tubulure d'aspiration, et
le dispositif d'alimentation (19') comporte une embouchure (42) prévue au niveau de l'entretoise de séparation (40) et dont la section d'ouverture est inclinée d'un angle de 45° par rapport à l'axe (26) de la tubulure d'aspiration, dans la direction de l'écoulement.

7. Moteur à combustion interne selon la revendication 6,
**caractérisé en ce que**
l'embouchure (42) est réalisée sur la face frontale d'un ajutage (43) traversant la paroi de la tubulure d'aspiration et arrivant jusqu'au niveau de la plage de l'entretoise de séparation, cet ajutage étant relié au vaporisateur de carburant (18).

8. Moteur à combustion interne selon l'une quelconque des revendications 1 à 7,
**caractérisé en ce que**
le vaporisateur de carburant (18) comporte des surfaces de chauffage par convection (20) entre lesquelles subsistent des intervalles de passage (21) de faible section, ainsi qu'un injecteur (22) pour injecter du carburant dans les intervalles de passage (21).

9. Moteur à combustion interne selon l'une quelconque des revendications 1 à 8,
**caractérisé par**
une chambre d'accalmie (14) en aval de la tubulure d'aspiration (15) et cette chambre (14) est reliée par des tuyaux oscillants (13) à chacun des différents cylindres (10).
